(19) Europäisches Patentamt
European Patent Office
Office européen des brevets

(11) **EP 1 906 581 A1**

(12) **EUROPEAN PATENT APPLICATION**

(43) Date of publication:
**02.04.2008 Bulletin 2008/14**

(51) Int Cl.:
**H04L 1/18** (2006.01)

(21) Application number: **06020608.3**

(22) Date of filing: **29.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Nokia Siemens Networks GmbH & Co. KG**
**81541 München (DE)**

(72) Inventors:
• **Bossert, Martin, Prof.**
**89075, Ulm (DE)**
• **Costa, Elena, Dr.**
**81739 München (DE)**
• **Lott, Matthias**
**82061 Neuried (DE)**
• **Schulz, Egon, Dr.**
**80993 München (DE)**
• **Weckerle, Martin Dr.**
**89077 (DE)**

(54) **Method and system for data transmission in a communications system**

(57) The present invention provides a method and system for method for data transmission in a communications system with at least one sender for transmitting data to at least one receiver, said data being encoded for transmission with a nested code C.

## FIG 2

$$\underline{C}_L = \boxed{\underline{\alpha}_L \mid r} \in C_L$$

$$\underline{C}_{L-1} = \boxed{000\ldots \mid \underline{\alpha}_L - 1 \mid r} \in C_{L-1}$$

$$\vdots$$

$$\underline{C}_2 = \boxed{000000000\ldots \mid \underline{\alpha}_2 \mid r} \in C_2$$

$$\underline{C}_1 = \boxed{000000000000\ldots \mid \underline{\alpha}_1 \mid r} \in C_1$$

EP 1 906 581 A1

**Description**

The present invention relates to a method and system for data transmission in a communications system, particularly data transmission over time varying channels in a mobile communications system.

In a communications system, data are transmitted over channels. Particularly in a mobile communications system using wireless channels, the characteristics of a channel with respect to noise varies over time. Data transmission over time varying channels is difficult since the amount of redundancy needed in order to correct the errors is also varying. Therefore, the concept of incremental redundancy was introduced in which a first transmission from a sender to a receiver has only a few redundancy bits. In case that too many errors occurred during transmission, the receiver requests more redundancy bits in a second transmission. If still no decoding is possible, the receiver requests more redundancy bits in a third transmission, and so on. The codes used for this method of incremental redundancy are called punctured codes.

It is necessary to analyze for each code individually which bits can be punctured. If only a limited number of bits can be used for puncturing, the flexibility with respect to the code word length is limited. A disadvantage that goes along with puncturing is that the distance behaviour of the punctured code changes. To avoid that a punctured code generates code words with small distances, i.e. code words that have bad error correction and/or error detection characteristics, the punctured bits have to be selected carefully. Furthermore, not every possible puncturing pattern is favourable, and there are patterns that should not be selected at all. Hence, the variability in the code word length is limited.

It remains to be found for a selected code the bits for puncturing. At the same time, the granularity and flexibility should be high to ensure that link-adaptation schemes can efficiently be used.

When using punctured codes for data transmission from a sender to a receiver, in a first transmission a set of code bits are not transmitted, i.e. they are punctured. If more redundancy is necessary as the transmission contains too many errors, at least a portion of the bits punctured in the first transmission are transmitted in a second transmission. For example, let $\underline{c} = (c_0, c_1, c_2, ..., c_{n-1})$ be a codeword of length $n$. In said first transmission, the bits $(c_1, c_2)$, $(c_4, c_5)$ and $(c_{n-2}, c_{n-1})$ are punctured, the transmitted data would therefore be $(c_0, c_3, c_6, ..., c_{n-3})$. In case more redundancy is needed, $(c_1, c_4, c_7, ..., c_{n-2})$ could be transmitted in said second transmission. In case of Reed-Solomon codes, the concept of erasure decoding can be used to determine which bits can be punctured at the coder.

With the conventional puncturing approach as described above, it is only possible to puncture certain code bits depending on the code. I.e., once the code is chosen for the transmission, the corresponding granularity of additional redundancy is fixed.

It is an aim of embodiments of the invention to address at the problem discussed above.

Said problem is solved by the features mentioned in the independent claims. Preferred embodiments of the invention are described in the dependant claims.

The present invention provides a method and system for data transmission in a communications system with at least one sender for transmitting data to at least one receiver, said data being encoded for transmission with a nested code C. Furthermore, a sender and a receiver with means for executing the method and a corresponding communications system are described.

The proposed invention provides the advantage that a large flexibility for transmitting additional redundancy in any arbitrary granularity is achievable. The invention allows to arbitrarily choose the amount of additional redundancy independent of the underlying code characteristics. Due to this flexibility, the most suitable code rate for the current channel conditions can be selected.

Preferred embodiments of the present invention will now be described with reference to the accompanying drawings in which:

Fig. 1: shows an example for a nested code

Fig. 2: shows an example for encoding a nested code

Fig. 3: shows an example for the use of a nested code for incremental redundancy

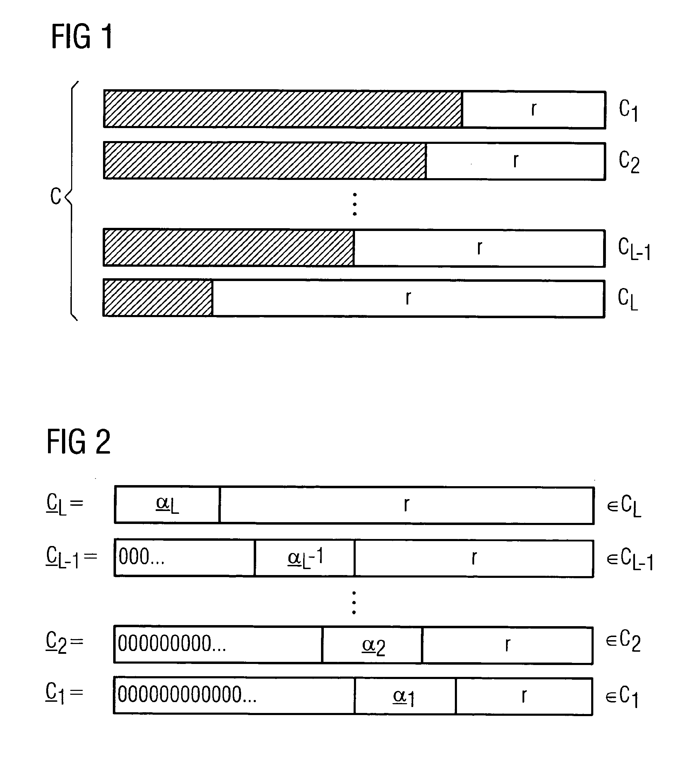

Fig. 1 shows an example for a nested code C (see M. Bossert, Channel Coding for Telecommunications; John Wiley & Sons, 1999). A code C is called nested if the following applies:

$$C_L \subset C_{L-1} \subset \ldots \subset C_2 \subset C_1$$

As depicted in Fig. 1, the redundancy r increases from $C_1$ up to $C_L$.

Fig. 2 shows an example for a nested code C as described above. In Fig. 2,

$$\underline{\alpha}_1, \quad \underline{\alpha}_2, \quad \ldots, \quad \underline{\alpha}_{L-1}, \quad \underline{\alpha}_L$$

represent information parts of corresponding codewords

$$\underline{c}_1, \quad \underline{c}_2, \quad \ldots, \quad \underline{c}_{L-1}, \quad \underline{c}_L$$

with

$$\underline{c} = \underline{c}_1 + \underline{c}_2 + \ldots + \underline{c}_{L-1} + \underline{c}_L \in C_1.$$

In this case, said codeword $\underline{c}$ is element of $C_1$, i.e. $\underline{c} \in C_1$. Furthermore, if $\underline{\alpha}_1$ is known, $\underline{c}_1$ is known too as well as the addition of $\underline{c} + \underline{c}_1 \in C_2$ due to the addition of binary values. Furthermore the following holds: $\underline{c} + \underline{c}_1 + \underline{c}_2 \in C_3$, and so on.

In the following, the use of nested codes for incremental redundancy is described.

In the first transmission, i.e. in the original transmission, the codeword $\underline{c} \in C_1$ is transmitted with, in total, a small redundancy part and hence a high code rate. If the decoding fails at the receiver, additional redundancy is provided on a second transmission by just sending $\underline{\alpha}_1$ or $\underline{\alpha}_1$ plus redundancy. By knowing $\underline{c}_1$ from $\underline{\alpha}_1$ (the number of offset bits, e.g. zero bits, at the beginning of $\underline{c}_1$ are known at the receiver) and by adding $\underline{c}_1$ to the previously received codeword $\underline{c}$ we obtain the codeword $\underline{c} + \underline{c}_1 \in C_2$ at the receiver, which contains more redundancy than the originally transmitted codeword and hence allows better error correction.

For a further third transmission, there are two possible ways to provide incremental redundancy:

1. The combination $\underline{c}_1 + \underline{c}_2 \in C_1$ is transmitted without leading zeros which leads to $\underline{c} + \underline{c}_1 + \underline{c}_2 \in C_3$ when combined with the originally received codeword $\underline{c}$ at the receiver.

2. The information and redundancy part of $\underline{c}_2$ is transmitted which can be combined with the previously transmitted information and redundancy part of $\underline{c}_1$ of the second transmission in order to obtain $\underline{c} + \underline{c}_1 + \underline{c}_2 \in C_3$.

Further following transmissions can be realized accordingly with the result of increasing more and more the in total transmitted redundancy.

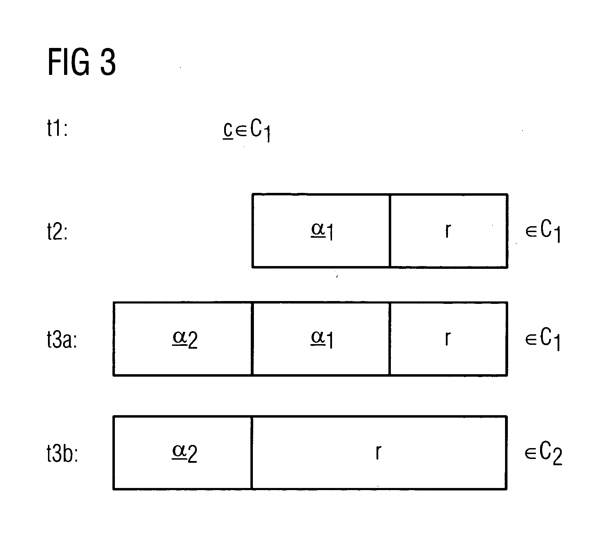

Fig. 3 shows an example for the use of a nested code for incremental redundancy. The figure illustrates successive transmission steps according to the above described method.

In the first transmission t1, the codeword $\underline{c} \in C_1$ is transmitted.

In the second transmission t2, $\underline{\alpha}_1$ plus redundancy r is transmitted.

For the third transmission t3a, t3b the two above described alternatives are shown:

In case of the first alternative t3a for the third transmission, the combination $\underline{\alpha}_1 + \underline{\alpha}_2$ plus redundancy r is transmitted which leads to $\underline{c} + \underline{c}_1 + \underline{c}_2 \in C_3$ when combined with the originally received codeword $\underline{c}$ at the receiver.

In case of the second alternative t3b for the third transmission, the information and redundancy part of $\underline{c}_2$, i.e. $\underline{\alpha}_2$ plus redundancy r is transmitted.

The described method can be applied in any kind of communications system using codes for data transmission.

**Claims**

1. A method for data transmission in a communications system with at least one sender for transmitting data to at least one receiver, said data being encoded for transmission with a nested code C.

2. The method in claim 1, said nested code C comprising at least one subcode $C_1$, $C_2$, ..., $C_L$ with

$$C = C_L \subset C_{L-1} \subset \ldots \subset C_2 \subset C_1,$$

and with a codeword comprising at least one subcodeword $\underline{c}_1, \underline{c}_2, \ldots, \underline{c}_{L-1}, \underline{c}_L$ with

$$\underline{c} = \underline{c}_1 + \underline{c}_2 + \ldots + \underline{c}_{L-1} + \underline{c}_L \in C_1,$$

with each subcodeword $\underline{c}_1, \underline{c}_2, \ldots, \underline{c}_{L-1}, \underline{c}_L$ comprising an information part $\underline{\alpha}_1, \underline{\alpha}_2, \ldots, \underline{\alpha}_{L-1}, \underline{\alpha}_L$ and a redundancy part r and a number of leading offset bits, with the number of leading offset bits for each subcodeword $\underline{c}_1, \underline{c}_2, \ldots, \underline{c}_{L-1}, \underline{c}_L$ being known at said receiver, the method comprising the steps of:

- in a initial transmission (t1) transmitting the codeword $\underline{c} \in C_1$
- while the receiver fails to decode the previous transmission (t1, t2, t3a, t3b), consecutively transmitting in a second transmission (t2) and in each following transmission (t3a, t3b) said subcodeword $\underline{c}_1$ and in each following transmission said subcodeword $\underline{c}_2, \ldots, \underline{c}_{L-1}, \underline{c}_L$ and the receiver decoding each subsequent transmission (t2, t3a, t3b) by adding said subcodeword $\underline{c}_1, \underline{c}_2, \ldots, \underline{c}_{L-1}, \underline{c}_L$ to said previously transmitted subcodeword.

3. The method in claim 1 or 2, wherein in case of the receiver failing to decode a transmission (t1, t2, t3a, t3b) a combination of said subcodeword $\underline{c}_1$ and a second subcodeword $\underline{c}_2, \ldots, \underline{c}_{L-1}, \underline{c}_L$ is transmitted.

4. Sender with means for sending data being encoded with a nested code C.

5. Receiver with means for receiving data being encoded with a nested code C.

6. Communications system with at least one sender according to claim 5 and at least one receiver according to claim 6.

## FIG 1

## FIG 2

## FIG 3

t1:                     $\underline{c} \in C_1$

t2:       $\underline{\alpha}_1$  |  r    $\in C_1$

t3a:    $\underline{\alpha}_2$  |  $\underline{\alpha}_1$  |  r    $\in C_1$

t3b:    $\underline{\alpha}_2$  |  r    $\in C_2$

European Patent

Office

**EUROPEAN SEARCH REPORT**

Application Number

EP 06 02 0608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FALAHATI ET AL: "Convolutional Coding and ARQ Schemes for Wireless Communications" PROCEEDINGS NORDIC RADIO SYMPOSIUM, [Online] October 1998 (1998-10), pages 203-210, XP002418477 Saltsjöbaden, Sweden Retrieved from the Internet: URL:http://db.s2.chalmers.se/download/publications/falahati_443.pdf> [retrieved on 2007-02-05] * page 205, paragraph 3.2 * * page 206, paragraph 4.3 - page 207, paragraph 5 * * page 210; figure 4 * | 1-6 | INV. H04L1/18 |
| X | EP 0 571 019 A2 (KONINKL PHILIPS ELECTRONICS NV [NL]) 24 November 1993 (1993-11-24) * page 2, line 3 - line 5 * * page 4, line 10 - page 6, line 31 * * claim 1; figure 1; table 2 * | 1,4-6 | |
| A | | 2,3 | TECHNICAL FIELDS SEARCHED (IPC) |
| X | HAGENAUER J: "RATE-COMPATIBLE PUNCTURED CONVOLUTIONAL CODES (RCPC CODES) AND THEIR APPLICATIONS" IEEE TRANSACTIONS ON COMMUNICATIONS, IEEE SERVICE CENTER, PISCATAWAY, NJ, US, vol. 36, no. 4, April 1988 (1988-04), pages 389-400, XP000670428 ISSN: 0090-6778 * abstract * * page 389, right-hand column - page 390, left-hand column * * page 396, left-hand column, paragraph V - page 397, right-hand column; figure 8 * | 1,4-6 | H04L |
| A | | 2,3 | |

The present search report has been drawn up for all claims

| Place of search | Date of completion of the search | Examiner |
|---|---|---|
| Munich | 6 February 2007 | Marzenke, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 0608

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2007

| Patent document cited in search report | Publication date | Patent family member(s) | Publication date |
|---|---|---|---|
| EP 0571019 A2 | 24-11-1993 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BOSSERT.** Channel Coding for Telecommunications. John Wiley & Sons, 1999